# EUROPÄISCHE PATENTSCHRIFT

(11) **EP 3 051 175 B1**
(45) Veröffentlichungstag und Bekanntmachung des Hinweises auf die Patenterteilung: **13.05.2020**
(21) Anmeldenummer: 16152983.9
(22) Anmeldetag: 27.01.2016
(51) Int. Cl.: F16F 9/48, F16F 9/512

(54) **DÄMPFERANORDNUNG, INSBESONDERE FÜR EINE KLAPPE EINES FAHRZEUGS**
DAMPER ASSEMBLY, IN PARTICULAR FOR A VALVE OF A VEHICLE
SYSTEME D'AMORTISSEUR, EN PARTICULIER POUR UN CLAPET D'UN VEHICULE AUTOMOBILE

(30) Priorität: 28.01.2015 DE 102015201474
(43) Veröffentlichungstag der Anmeldung: 03.08.2016
(73) Patentinhaber: Stabilus GmbH, 56070 Koblenz (DE)
(72) Erfinder: Löhken, Lars, 53229 Bonn (DE); Probst, Ulrich, 56204 Hillscheid (DE); Hewel, Michael, 56154 Boppard (DE)
(74) Vertreter: Feller, Frank

(56) Entgegenhaltungen:
- EP-A1- 1 215 414
- EP-A1- 2 233 775
- DE-A1- 3 301 544
- DE-A1- 19 604 721
- DE-A1- 19 649 836
- DE-U1-202005 021 470
- US-A1- 2008 006 147

## Beschreibung

Die vorliegende Erfindung betrifft eine Dämpfereinheit umfassend einen mit einem Dämpfungsfluid, vorzugsweise einer Hydraulikflüssigkeit, gefüllten Zylinder, in dem eine Kolbenstange entlang einer axialen Richtung des Zylinders ein- und ausführbar geführt ist, wobei der Kolbenstange eine sich zwischen der Kolbenstange und einer Innenwand des Zylinders erstreckende Bodenfläche mit wenigstens einer axialen Durchbrechung zugeordnet ist, welche einen effektiven Durchflussquerschnitt für Dämpfungsfluid definiert. Ferner betrifft die Erfindung eine Dämpferanordnung für eine Klappe eines Kraftfahrzeugs sowie eine Klappenanordnung eines Fahrzeugs mit einer derartigen Dämpferanordnung.

Aus dem Stand der Technik sind derartige hydraulische Dämpfereinheiten bekannt, deren Dämpfungsverhalten sich mit der Einführgeschwindigkeit des Kolbens in den Zylinder ändert. Hierbei wird durch die an der Kolbenstange bereitgestellte Kolbenfläche der Innenraum des Zylinders in zwei Raumbereiche aufgeteilt, zwischen denen das Dämpfungsfluid auf vorgegebene Weise strömen kann.

Es gibt insbesondere vielerlei denkbare Anwendungen für hydraulische Dämpfer, die bei einer Einführgeschwindigkeit oberhalb eines festgelegten Schwellenwerts eine höhere Dämpfungskraft aufweisen, das heißt die Einführbewegung des Kolbens in den Zylinder stärker hemmen als unterhalb der vorbestimmten Einführgeschwindigkeit. Derartige hydraulische Dämpfer sind allerdings bisher in ihrem Aufbau relativ kompliziert und daher aufwändig und teuer herzustellen, sowie fehleranfällig. Ein Beispiel für eine derartige gattungsgemäße Dämpfereinheit ist beispielsweise aus der EP 2 233 775 A1 bekannt.

Vor dem Hintergrund dieser Problematik ist es eine Aufgabe der vorliegenden Erfindung, eine Dämpfereinheit bereitzustellen, bei der die gewünschte einführgeschwindigkeitsabhängige Charakteristik mit einfachen konstruktionellen Mitteln erreicht wird, und die daher einfach und kostengünstig herzustellen, sowie robust ist.

Gemäß einem ersten Aspekt der Erfindung wird die genannte Aufgabe durch eine Dämpfereinheit nach Anspruch 1 gelöst.

Mit der erfindungsgemäßen Dämpfereinheit ist es möglich, durch das Vorsehen lediglich eines axial gleitbaren, an der Kolbenstange vorgesehenen Elements, die gewünschte Dämpfungscharakteristik zu erzielen. Auf diese Weise kann mit einfachsten Mitteln eine Dämpfereinheit bereitgestellt werden, die die gewünschte Dämpfungscharakteristik aufweist, das heißt unterhalb einer vorbestimmten Einführgeschwindigkeit eine erste Dämpfungskraft aufweist und oberhalb der vorbestimmten Einführgeschwindigkeit eine zweite Dämpfungskraft aufweist, die größer als die erste Dämpfungskraft ist.

In einer bevorzugten Ausführungsform kann der Anschlag durch ein Hülsenelement gebildet sein, welches einen im Wesentlichen entlang der axialen Richtung verlaufenden, von der Kolbenstange beabstandeten und in Einführrichtung der Kolbenstange offenen Mantel aufweist, so dass zwischen der Kolbenstange und dem Mantel eine Kammer gebildet ist, und wobei an dem offenen Ende des Mantels in Einführrichtung der Kolbenstange die Stirnfläche des Anschlags definiert ist, wobei das elastische Element wenigstens teilweise in der zwischen der Kolbenstange und dem Hülsenelement gebildeten Kammer aufgenommen ist, so dass es sich einerseits an dem Hülsenelement und andererseits an dem Kolbenbodenelement abstützt. Durch ein solches Hülsenelement lässt sich erreichen, dass als elastisches Element ein elastisch komprimierbares Element verwendet werden kann, welches axial zwischen dem Kolbenbodenelement und dem Hülsenelement wirkt, und zwar auch dann, wenn das Kolbenbodenelement an dem Hülsenelement anschlägt.

Erfindungsgemäß ist dem Kolbenbodenelement ein Dichtungselement zugeordnet, welches eine Dichtung zwischen dem Kolbenbodenelement und der Innenwand des Zylinders bewirkt. Durch das Vorsehen des Dichtungselements kann verhindert werden, dass Dämpfungsfluid zwischen dem Kolbenbodenelement und der Innenwand des Zylinders durchdringen kann, was eine präzise Einstellung der Dämpfungseigenschaften der Dämpfereinheit sicherstellt, da auf diese Weise lediglich die wenigstens eine axiale Durchbrechung in der Bodenfläche ein Strömen von Dämpfungsfluid zwischen den beiden durch die Bodenfläche getrennten Raumbereiche des Zylinders erlaubt.

In einer möglichen Ausführungsform kann das Dichtungselement integral mit dem Kolbenbodenelement gebildet oder fest verbunden sein, beispielsweise mit dem Kolbenbodenelement verklebt sein. Es ist ferner ebenfalls denkbar, das Dichtungselement gesondert von dem Kolbenbodenelement auszubilden, wobei in einer solchen Ausführungsform das Dichtungselement zwischen dem Kolbenbodenelement und einem Halteelement aufgenommen sein kann, wobei das Halteelement ebenfalls gleitbar an der Kolbenstange getragen sein kann und wenigstens eine axiale Durchbrechung aufweisen kann. Bei einer solchen Ausführungsform kann auf ein aufwändiges Verbinden von Kolbenbodenelement und Dichtungselement verzichtet werden.

In beiden genannten Fällen kann das Dichtungselement einen rechteckigen Querschnitt aufweisen und als sogenanntes Rechteckringelement ausgeführt sein.

Ferner kann in einer weiteren bevorzugten Ausführungsform die Kolbenstange in ihrem axialen Bereich zwischen dem Abschlusselement und dem Hülsenelement einen verringerten Umfang aufweisen. Auf diese Weise kann die erfindungsgemäße Dämpfereinheit besonders kompakt gebildet werden, da hierbei die Kolbenstange vergleichsweise dünn gebildet werden kann, wodurch auf eine Vergrößerung des Zylinders verzichtet werden kann.

In einer besonders einfachen Ausführungsform kann das Abschlusselement durch eine auf die Kolbenstange aufgeschraubte Schraubenmutter gebildet sein, was die Herstellungskosten der erfindungsgemäßen Dämpfereinheit durch die Verwendung von konfektionierten Komponenten weiter verringern kann.

Je nach Einsatzfeld einer Dämpfereinheit kann es ferner notwendig oder gewünscht sein, dass auf die Kolbenstange ab einem vorbestimmten Einführweg in den Zylinder eine verringerte Dämpfungskraft wirken soll. Im Stand der Technik wird diese Aufgabe dadurch gelöst, dass in der Innenwand des Zylinders axiale Ausnehmungen oder Nuten vorgesehen sind, wobei der im Wesentlichen kreisförmige Innenquerschnitt des Zylinders jedoch beibehalten wird. Die Nuten dienen hierbei als Bypasskanäle für das Dämpfungsfluid, so dass dem Kolbenboden im Bereich der Nuten im Zylinder ein verringerter Widerstand bei einem Einführen entgegengebracht wird, da das Dämpfungsfluid an ihm durch die Nuten vorbei strömen kann. Um mittels dieses Mechanismus die Dämpfungskraft ausreichend zu verringern, sind jedoch hohe Durchflussquerschnitte für das Dämpfungsfluid nötig, was zwangsläufig dazu führt, dass die Nuten relativ weit von der Innenwand des Zylinders in das Material des Zylinders hineinreichen müssen. Auf diese Weise wird die Struktur des Zylinders geschwächt. Somit kann es nötig sein, dickwandigere Zylinder vorzusehen, was zu erhöhten Kosten und einem erhöhten Platzbedarf der Dämpfereinheit führen kann. Ferner können an den Übergängen der Innenwand des Zylinders zu den Nuten Kanten vorhanden sein, an denen beispielsweise bei einer Querbelastung Druckspitzen auftreten können. Auch dieses Phänomen kann die Dämpfereinheit strukturell schwächen.

Um die genannten Nachteile von bekannten Dämpfereinheiten auszuräumen, ist gemäß einer Weiterbildung der Erfindung eine Dämpfereinheit vorgesehen, in welcher das Dichtungselement eine Innenwand des Zylinders berührt, wobei der Zylinder einen axialen Abschnitt umfasst, in welchem die Innenwand des Zylinders einen Querschnitt von der Form eines Polygons mit nach außen gebogenen Kanten und abgerundeten Ecken aufweist.

Die erfindungsgemäße Ausgestaltung der Innenwand des Zylinders stellt eine Optimierung gegenüber den aus dem Stand der Technik bekannten Nuten in mehrerlei Hinsicht dar. Einerseits ist für eine gute Führung des Kolbens durch die nach außen gebogenen Kanten des Polygons gesorgt, wobei im Gegensatz zum Stand der Technik keine Kanten vorliegen, an denen Druckspitzen auftreten können. Gleichzeitig erlaubt die erfindungsgemäße Form der Innenwand des Zylinders einen im Verhältnis zum Zylinderdurchmesser weitaus größeren Durchflussquerschnitt für das Dämpfungsfluid als durch Nuten bereitgestellt werden könnte. Dies trägt dazu bei, dass die Gesamtgröße des Zylinders kompakt gehalten werden kann. Ferner ist ein Zylinder mit der erfindungsgemäßen Form von einer Innenwand im Vergleich zu bekannten Dämpfereinheiten auch einfacher herzustellen.

In einer Ausführungsform der Weiterbildung der Erfindung, kann der Kolben in axialer Ansicht einen im Wesentlichen kreisförmigen Umfang aufweisen, wobei der Umfang des Kolbens im Wesentlichen einem einbeschriebenen Kreis des Polygons entspricht. Auf diese Weise kann ein Kolben von an sich bekannter und vorteilhafter Umfangsform stabil und reibungsarm an den nach außen gebogenen Kanten des Polygons geführt werden.

Ferner kann in einer Dämpfereinheit nach der Weiterbildung der Erfindung der Kolben in axialer Ansicht einen im Wesentlichen kreisförmigen Umfang aufweisen, wobei der Zylinder einen ersten axialen Abschnitt umfasst, in welchem die Innenwand des Zylinders einen kreisförmigen Querschnitt aufweist, welcher im Wesentlichen denselben Umfang hat wie der Kolben, und wobei der Zylinder einen zweiten axialen Abschnitt umfasst, in welchem die Innenwand des Zylinders den Querschnitt von der Form eines Polygons mit nach außen gebogenen Kanten und abgerundeten Ecken aufweist, wobei der Umfang des Kolbens im Wesentlichen einem einbeschriebenen Kreis des Polygons entspricht. Eine solche Dämpfereinheit ermöglicht dann insbesondere unterschiedliche Dämpfungscharakteristiken in Abhängigkeit vom Einfahrweg der Kolbenstange, das heißt abhängig von der Relativlage zwischen Kolbenstange und Zylinder. Bei der Anwendung der Dämpfereinheit zur Steuerung einer Klappenbewegung kann dann die Dämpfungscharakteristik von der Klappenstellung (zum Beispiel dem Öffnungswinkel oder der Position der Klappe) abhängen. Eine vergleichbare Wirkung lässt sich erreichen, wenn der Kolben eine von einer Kreisform abweichende, vorbestimmte Umfangsform aufweist und der Zylinder in dem ersten axialen Abschnitt an die vorbestimmte Umfangsform des Kolbens angepasste Querschnittsform an der Innenwand aufweist und in dem zweiten axialen Abschnitt der Kolben die Innenwand des Zylinders in zwei oder mehr begrenzten Abschnitten tangiert. Im Allgemeinen ist an dieser Stelle anzumerken, dass im Sinne der vorliegenden Offenbarung in allen Aspekten der Erfindung der Begriff "Zylinder" nicht notwendigerweise für einen kreisförmigen Zylinder steht, sondern beliebige Querschnittsformen einschließt. Darüber hinaus ist die Außenwandung des Zylinders zwar gegebenenfalls kreisförmig, um beispielsweise eine Montage mit Standard-Befestigungen zu erleichtern, die Außenwandung kann jedoch auch beliebige andere Querschnittsformen aufweisen. Die Form des Außenumfangs kann von der Form des Innenumfangs des Zylinders abweichen oder kann der Form des Innenumfangs entsprechen (konstante Wandstärke).

In einer möglichen Ausführungsform kann das Polygon ein Dreieck sein, es sind allerdings auch Polygone mit mehr als drei Ecken denkbar. Da gemäß dem zweiten Aspekt der Erfindung eine Dämpfereinheit bereitgestellt ist, deren Dämpfungskraft abhängig ist von dem Einführbetrag des Kolbens in den Zylinder, kann in einer Weiterentwicklung daran gedacht werden, insbesondere im ersten axialen Bereich des Zylinders die Innenwand des Zylinders über wenigstens einen Teil des Bereichs mit wenigstens einer axialen Nut zu versehen. Diese Maßnahme erlaubt eine weiter verfeinerte Einstellung der Abhängigkeit der Dämpfungskraft von der momentanen Position der Kolbenstange, wobei es sich insbesondere anbietet, im ersten axialen Bereich lediglich Nuten vorzusehen, deren Tiefe in der Innenwand des Zylinders kleiner ist als die Tiefe der Ecken des Polygons des zweiten axialen Bereichs.

In einer weiter bevorzugten Ausführungsform kann vorgesehen sein, dass ein Gesamtquerschnitt der wenigstens einen axialen Nut in Einführrichtung der Kolbenstange abnimmt. Hierbei ist in dem Fall, dass an einer vorbestimmten axialen Position des Zylinders mehr als eine Nut vorliegt, der Gesamtquerschnitt als die Summe der einzelnen Querschnitte der mehreren Nuten definiert. Alternativ kann der Gesamtquerschnitt der wenigstens einen axialen Nut in Einführrichtung der Kolbenstange auch zunehmen. Durch diese beiden Ausgestaltungen wird jeweils eine progressive oder degressive Dämpfungscharakteristik der Dämpfereinheit bezüglich des Einführwegs der Kolbenstange in den Zylinder erreicht.

Gemäß einem zweiten Aspekt der Erfindung wird eine Dämpferanordnung für eine Klappe eines Kraftfahrzeugs, umfassend eine erfindungsgemäße Dämpfereinheit, bereitgestellt.

Aus Gründen der Aerodynamik und auch aus optischen Gründen wird im Fahrzeugbau, und insbesondere im Automobilbau, in jüngster Zeit eine Reduzierung der Spaltmaße im Bereich von Klappen (z.B. Hauben) angestrebt. Allerdings besteht hierbei die Gefahr, dass bei einem schnellen Schließen der Klappe aufgrund der verringerten Spaltmaße die Klappe darunterliegende Teile, wie beispielsweise Scheinwerfer, berühren oder beschädigen kann.

Um dieser Gefahr zu begegnen, ist erfindungsgemäß eine Dämpferanordnung für eine Klappe eines Kraftfahrzeugs bereitgestellt, die bei einer Schließgeschwindigkeit der Klappe unterhalb eines vorbestimmten Schwellenwerts eine erste Dämpfungskraft aufweist, und bei einer Schließgeschwindigkeit oberhalb des Schwellenwerts eine zweite Dämpfungskraft aufweist, welche größer ist als die erste Dämpfungskraft. Durch das Vorsehen einer derartigen Dämpferanordnung kann durch eine gezielte Reduktion der Schließgeschwindigkeit der Klappe durch eine variable Dämpfungskraft verhindert werden, dass die Klappe zu schnell schließt. Somit wird die Gefahr von Beschädigung von der Klappe benachbarten Komponenten des Kraftfahrzeugs beseitigt.

Um zu verhindern, dass die Klappe am Ende des Schließwegs durch die Dämpferanordnung letztlich so stark abgebremst worden ist, dass sie nicht mehr sicher in ihr Schloss fällt, kann vorgesehen sein, dass die Dämpferanordnung bei einer Schließbewegung der Klappe ab einem vorbestimmten Schließweg eine dritte Dämpfungskraft aufweist, welche kleiner als die erste und die zweite Dämpfungskraft ist. In dieser Weiterentwicklung ist die Dämpfungskraft folglich sowohl von der Geschwindigkeit der Schließbewegung der Klappe als auch dem zurückgelegten Weg der Klappe abhängig. Auf diese Weise wird eine hervorragende Flexibilität bei der Kontrolle der Schließbewegung der Klappe durch lediglich eine Dämpferanordnung erreicht.

Insbesondere kann die erfindungsgemäße Dämpferanordnung eine Dämpfereinheit gemäß dem ersten oder/und zweiten Aspekt der Erfindung umfassen.

Die Kolbenstange kann an ihrem dem Kolben gegenüberliegenden Ende einen Klappenanschlag aufweisen, welcher dafür eingerichtet ist, bei der Schließbewegung der Klappe in Kontakt mit der Klappe zu gelangen, sodass die Klappe eine axiale Kraft in einer Einführrichtung der Kolbenstange in den Zylinder auf den Klappenanschlag überträgt. Durch eine solche Dämpferanordnung wird der Vorteil erzielt, dass die Länge der Dämpferanordnung nicht dafür ausgelegt sein muss, den gesamten Bewegungsweg der Klappe abzubilden, sondern lediglich den Bereich, in welchem eine Dämpfung durch die Dämpferanordnung gewünscht ist. Über einen Teilbereich des gesamten Bewegungsbereichs der Klappe kann die Klappe dann frei von der Wirkung der Dämpferanordnung, das heißt entkoppelt von der Dämpferanordnung, bewegt werden, und erst an einem bestimmten Punkt während der Schließbewegung der Klappe tritt die Klappe in Anlagekontakt mit dem Klappenanschlag und beginnt die Kolbenstange in den Zylinder einzuschieben, wobei dieser Bewegungsbereich der Klappe dann durch die Dämpfungscharakteristik der Dämpferanordnung gesteuert wird. Für dieses Prinzip der teilweisen Entkopplung zwischen Klappe und Dämpferanordnung wird gemäß dem nachfolgend beschriebenen vierten Aspekt der Erfindung selbstständiger Schutz beansprucht.

Nach dem dritten Aspekt der Erfindung wird zur Lösung der oben genannten Aufgabe eine Klappenanordnung bereitgestellt, umfassend einen Rahmen eines Kraftfahrzeugs, eine an dem Rahmen zwischen einer Öffnungsstellung und einer Schließstellung bewegbar angebrachte Klappe sowie eine Dämpferanordnung der vorstehend genannten Art, dessen Zylinder an dem Rahmen oder an der Klappe befestigt oder zu befestigen ist, wobei die Klappe von der Öffnungsstellung aus über einen ersten Teilwegbereich im Wesentlichen von der Dämpferanordnung entkoppelt bewegbar ist, bis die Klappe an dem Klappenanschlag anschlägt, und wobei die Klappe anschließend über einen zweiten Teilwegbereich in die Schließstellung bewegbar ist und dabei die Kolbenstange in den Zylinder einschiebt. Ein bevorzugtes Anwendungsbeispiel für eine solche Klappenanordnung ist eine Motorhaubenanordnung eines Kraftfahrzeugs, wobei die Dämpferanordnung insbesondere das Schließen der Motorhaube steuert. In einem ersten Teilwegbereich der Motorhaube von der vollständig geöffneten Stellung bis zu einer Zwischenstellung zwischen der geöffneten und der geschlossenen Stellung ist die Motorhaube von der Dämpferanordnung im Wesentlichen entkoppelt, das heißt eine Bewegung der Haube führt nicht zu einer Relativbewegung zwischen Kolbenstange und Zylinder. In der Zwischenstellung (welche beispielsweise bei einem Öffnungswinkel von weniger als 30, vorzugsweise weniger als 15 Grad, das heißt in der Nähe der geschlossenen Stellung liegen kann) schlägt dann die Haube an dem Klappenanschlag an und die Schließbewegung wird gedämpft. Das bedeutet, dass ein Zufallen der Haube vermieden wird und die Haube durch die Dämpferanordnung abgefangen wird. In diesem Abschnitt ist die Dämpfung durch die Dämpferanordnung relativ groß und kann insbesondere auf die hohe Geschwindigkeit der Haube beim Herunterfallen durch entsprechend hohe Dämpfkraft reagieren. Vorzugsweise ist die Dämpferanordnung derart ausgebildet, dass in einem letzten Wegbereich kurz vor dem vollständigen Schließen der Klappe die Dämpfungskraft wieder in einem vorbestimmten Maße reduziert wird, sodass eine bestimmte Mindestgeschwindigkeit der Haube (beispielsweise aufgrund ihrer Gewichtskraft) sichergestellt wird, die ein sicheres Schließen der Haube im Schließmechanismus gewährleistet.

Die Erfindung wird nachfolgend anhand eines Ausführungsbeispiels unter Bezugnahme auf die beigefügten Zeichnungen näher erläutert. Diese zeigen im Einzelnen:
- Figur 1:: einen Längsschnitt durch eine erfindungsgemäße Dämpfereinheit des Ausführungsbeispiels in einer ersten Ausführungsvariante;
- Figur 2:: eine zweite Ausführungsvariante, in der eine alternative Möglichkeit zur Ausgestaltung des zweiten Klappenanschlags illustriert ist;
- Figur 3:: eine vergrößerte Ansicht des Bereichs des Kolbenbodens der Dämpfereinheit aus Figur 1; und
- Figur 4:: einen Querschnitt durch einen Zylinder einer erfindungsgemäßen Dämpfereinheit in einem Bereich, in dem die Innenwand des Zylinders eine Polygonform aufweist.

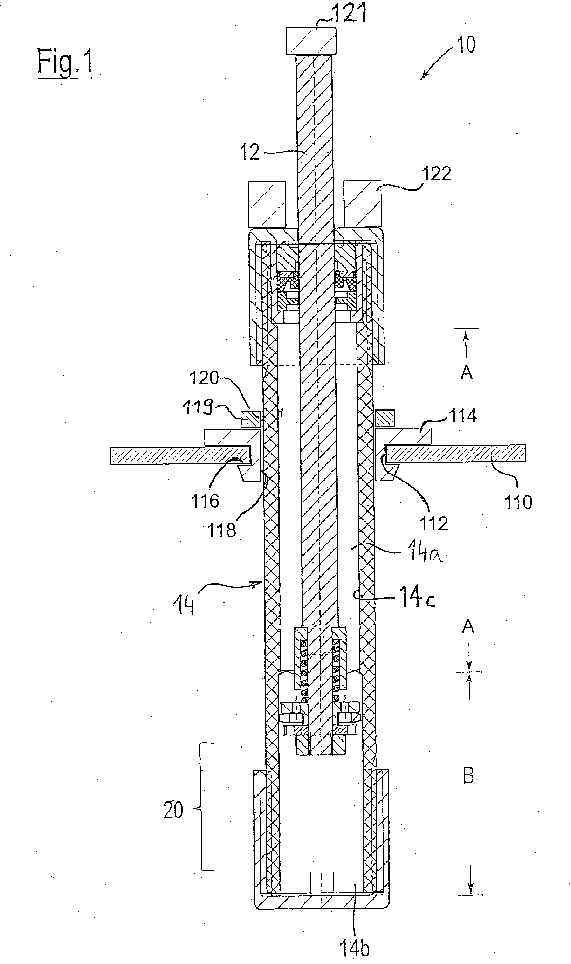

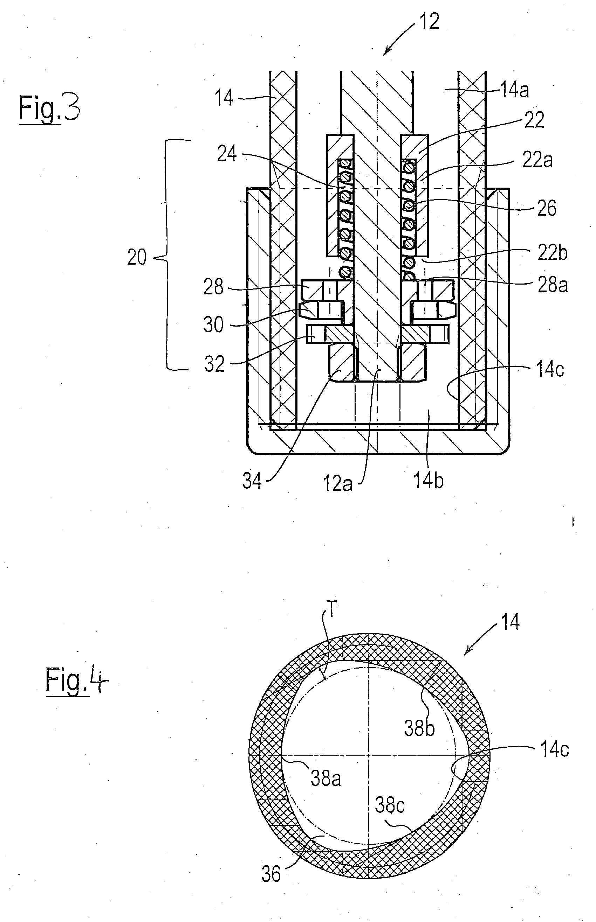

In Figur 1 ist eine erfindungsgemäße Dämpfereinheit ganz allgemein mit 10 bezeichnet und umfasst eine Kolbenstange 12 und einen Zylinder 14 mit einem im Wesentlichen runden Querschnitt. Die Kolbenstange 12 ist im in Figur 1 oben dargestellten Bereich in den Zylinder 14 eingeführt, wobei an sich bekannte Lager- und Dichtungselemente vorgesehen sind, die hier im Einzelnen nicht beschrieben werden. Der Zylinder 14 weist bezüglich der Form seiner Innenwand 14c im Wesentlichen zwei Abschnitte A und B auf, die später anhand der Figur 3 erläutert werden. Im Innenraum des Zylinders 14 befindet sich ein Dämpfungsfluid, vorzugsweise eine Hydraulikflüssigkeit, wobei der Innenraum des Zylinders 14 durch eine in Figur 1 allgemein mit dem Bezugszeichen 20 bezeichnete Kolbenbodenanordnung in einen ersten Bereich 14a und einen zweiten Bereich 14b unterteilt wird.

Die Dämpfereinheit 10 kann in verschiedenen Anwendungsbereichen eingesetzt werden, insbesondere ist eine Verwendung zum Dämpfen der Schließbewegung bei einer nicht gezeigten Klappe eines Kraftfahrzeugs denkbar, wobei in diesem Fall der Zylinder 14 mit der Karosserie des Fahrzeugs verbunden wäre und die gleitbar in dem Zylinder aufgenommene Kolbenstange 12 entweder direkt mit der Klappe verbunden wäre oder bei einer Schließbewegung derselben mit ihr in Verbindung kommen würde. Alternativ könnte der Zylinder 14 mit der Klappe verbunden sein und die Kolbenstange 12 könnte an der Karosserie angebracht sein beziehungsweise einen Anschlag zur Kontaktierung der Karosserie beim Schließen der Klappe aufweisen.

Figur 1 zeigt eine Ausführungsvariante einer Klappenanordnung, in welcher der Zylinder 14 an einer in Figur 1 nur ausschnittsweise dargestellten Karosserie 110 (dargestellt ist ein Karosserieblech im Querschnitt) montiert ist, insbesondere in eine Montageöffnung 112 in der Karosserie 110 eingesetzt und dort durch ein Befestigungselement 114 befestigt ist. Als Befestigungselement 114 kann ein Ringelement aus elastischem Material zum Einsatz kommen, welches für eine Montage elastisch komprimierbar ist und sich nach dem Einschieben in die Montageöffnung 112 expandiert und mit Hinterschneidungen 116 hinter dem Blech der Karosserie 110 klipp-artig verhakt. Beispielsweise kann das ringartige Befestigungselement 114 mindestens einen Schlitz aufweisen, welcher eine Verkleinerung des Durchmessers des Rings gegen die elastische Rückstellkraft des Materials des Befestigungselements 114 erlaubt, um das Befestigungselement 114 in die Montageöffnung 112 einzuklipsen.

Ein Gewinde 118 an einem Innenumfang des Befestigungselements 114 kann mit einem Außengewinde 120 in Eingriff stehen, welches am Außenumfang des Zylinders 14 vorgesehen ist, sodass der Zylinder 14 in das Befestigungselement 114 eingeschraubt und somit an der Karosserie 110 angebracht werden kann. Der Gewindeeingriff 118, 120 kann ferner eine Höhenverstellung der Dämpfereinheit zur Feinjustierung der Anschlagsposition der Klappenanordnung erlauben. Gewünschtenfalls kann eine eingestellte Relativlage zwischen Zylinder 14 und Befestigungselement 114 durch eine Kontermutter 119 fixiert werden, welche ebenfalls mit dem Außengewinde 120 des Zylinders 14 im Gewindeeingriff ist und gegen das Befestigungselement 14 geschraubt wird.

Als zusätzlicher Vorteil kann das Befestigungselement 114 derart gestaltet sein, dass der in das Befestigungselement 114 eingeschraubte Zylinder 14 eine Komprimierung und damit Durchmesserverkleinerung des ringförmigen Befestigungselements 14 blockiert, sodass die Hinterschneidungen 116 ein unbeabsichtigtes Lösen des Befestigungselements 114 und damit auch der Dämpfereinheit 10 vom Karosserieblech der Karosserie 110 wirkungsvoll verhindern. Andere dem Fachmann geläufige Varianten zur Befestigung des Zylinders 14 an der Karosserie 110 sind denkbar, beispielsweise durch einen Klemmeingriff oder durch eine Schweiß- oder Klebeverbindung.

An einem aus dem Zylinder 14 heraus stehenden Ende der Kolbenstange 12 ist ein erster Klappenanschlag 121 vorgesehen, an welchem die Klappe bei ihrer Schließbewegung anschlägt. Der erste Klappenanschlag kann zur Geräuschdämmung und ersten Stoßdämpfung durch ein elastisches Polster, beispielsweise ein Gummipolster, gebildet sein.

Ein zweiter Klappenanschlag 122 kann zusätzlich oder alternativ zum ersten Klappenanschlag 121 an einer Stirnseite des Zylinders 14 angeordnet sein, an welcher die Kolbenstange 12 aus dem Zylinder 14 heraus steht. Der zweite Klappenanschlag 122 kann zum Einsatz kommen, um einen Endpunkt der Klappenbewegung festzulegen und die Klappe im vollständig geschlossenen Zustand letztendlich vollends abzustützen, sodass diese Belastung weder vom Schließmechanismus der Klappe noch von der Kolbenstange 12 aufgenommen werden muss, sondern statt dessen über den Zylinder 14 direkt in die Karosserie 110 eingeleitet werden kann.

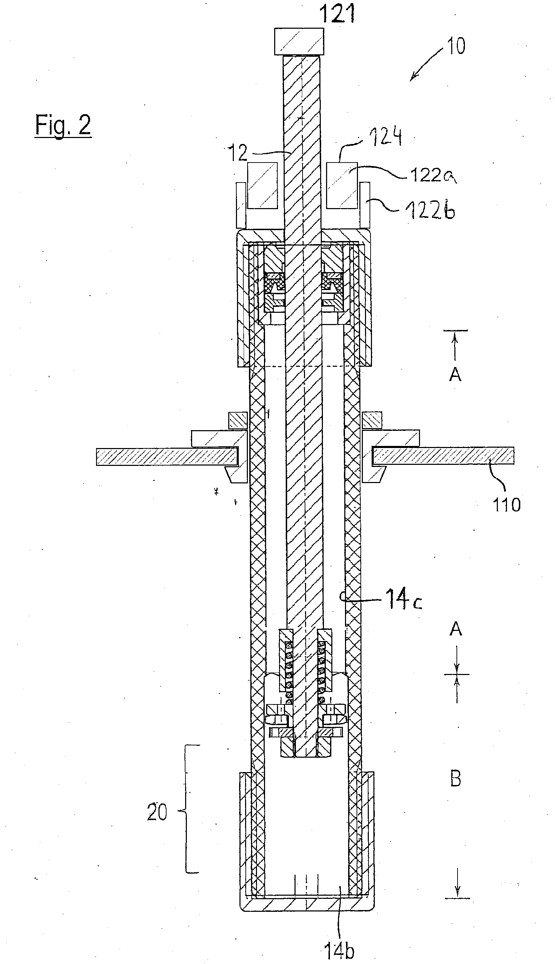

Der zweite Klappenanschlag 122 kann durch einen Aufsatz aus elastischem Material, beispielsweise einen Gummipuffer, ausgestaltet sein. In der in Figur 1 gezeigten Ausführungsvariante ist der zweite Klappenanschlag 122 unmittelbar auf die Stirnseite des Zylinders 14 montiert, beispielsweise angeklebt. In einer in Figur 2 dargestellten alternativen Variante umfasst der zweite Klappenanschlag 122 einen Pufferkörper 122a, welcher die Kolbenstange 12 umschließt und entlang der Kolbenstange 12 axial verschiebbar ist, wobei der Pufferkörper 122a ein Außengewinde aufweist, welches in Eingriff mit einem Innengewinde einer an der Stirnseite des Zylinders 14 befestigten Mutter 122b ist. Durch Verdrehen des Pufferkörpers 122a relativ zur Mutter 122b lässt sich die Position des Pufferkörpers 122a in axialer Richtung verstellen, sodass eine dem Zylinder 14 abgewandte Anschlagsfläche 124 des Pufferkörpers 122a hinsichtlich ihrer axialen Position relativ zum Zylinder 14 verstellbar ist.

In Figur 3 ist der Bereich der Kolbenbodenanordnung 20 aus Figur 1 vergrößert dargestellt. Die Kolbenbodenanordnung 20 befindet sich in Einführrichtung der Kolbenstange 12 in den Zylinder 14 betrachtet am vorderen Ende dieser Kolbenstange 12. In diesem Bereich weist die Kolbenstange 12 einen Abschnitt mit verkleinertem Umfang 12a auf, an welchem ein Hülsenelement 22 an der Kolbenstange 12 angeordnet (montiert oder fest vorgesehen) ist, das einen von der Kolbenstange 12 beabstandeten und in Einführrichtung der Kolbenstange 12 in den Zylinder 14 offenen Mantel 22a aufweist. Hierbei wird zwischen dem Mantel 22a des Hülsenelements 22 und der Kolbenstange 12 eine Kammer 24 definiert. Ferner ist am offenen Ende des Mantels 22a des Hülsenelements 22 eine Stirnfläche 22b definiert. In der Kammer 24 ist eine Spiralfeder 26 aufgenommen, die mit der Hülse 22 und einem axial gleitbar an der Kolbenstange 12 getragenen Kolbenbodenelement 28 zusammenwirkt.

In den Figuren 1 bis 3 befindet sich die Kolbenstange 12 in Ruhe oder wird soeben aus dem Zylinder 14 herausgezogen. In diesen beiden Zuständen ist durch die Wirkung der Spiralfeder 26 oder/und durch den Staudruck des Dämpfungsfluids im ersten Abschnitt 14a des Innenraums des Zylinders 14 das Kolbenbodenelement 28 von der Hülse 22 beabstandet. Das gezeigte Kolbenbodenelement 28 weist eine Mehrzahl von axialen Durchbrechungen 28a auf, durch welche Dämpfungsfluid von dem ersten Bereich 14a in den zweiten Bereich 14b des Innenraums des Zylinders 14 und umgekehrt strömen kann. Dem Kolbenbodenelement 28 ist ein Dichtungselement 30 zugeordnet, das für eine Dichtung zwischen dem Kolbenbodenelement 28 und der Innenwand 14c des Zylinders 14 sorgt. Das Dichtungselement 30 ist in der gezeigten Ausführungsform durch ein ringförmiges Element mit einem rechteckigen oder trapezförmigen Querschnitt gebildet, das beispielsweise aus einem geeigneten Kunststoff gefertigt sein kann. In der gezeigten Ausführungsform ist das Dichtungselement 30 nicht fest mit dem Kolbenbodenelement 28 verbunden, sondern wird durch dieses lediglich in eine Richtung abgestützt, während es in die andere Richtung von einem Haltescheibenelement 32 abgestützt wird. Sowohl das Dichtungselement 30 als auch das Haltescheibenelement 32 sind mit ausreichenden axialen Durchbrechungen bereitgestellt, so dass sie dem Fluss des Dämpfungsfluids im Vergleich an dem Kolbenbodenelement 28 nur einen geringen Widerstand entgegenbringen. Am vorderen Ende der Kolbenstange 12 ist ein Abschlusselement 34 vorgesehen, beispielsweise in Form einer Schraubenmutter auf die Kolbenstange 12 aufgeschraubt, um so die Elemente der Kolbenbodenanordnung 20 an der Kolbenstange zu fixieren.

Wie bereits angemerkt, ist der in Figur 1 und Figur 2 gezeigte Zustand derjenige, in dem die Kolbenstange 12 momentan entweder ruht oder aus dem Zylinder 14 herausbewegt wird. Wenn nun andererseits die Kolbenstange 12 momentan in den Zylinder 14 eingeführt wird, so wirkt durch das Dämpfungsfluid im zweiten Bereich 14b des Innenraums des Zylinders 14 ein Staudruck auf das Haltescheibenelement 32, das Dichtungselement 30 und das Kolbenbodenelement 28, der zu einer Kraft führt, die die genannten Komponenten in Richtung des Hülsenelements 22 drückt. Liegt die Einführgeschwindigkeit der Kolbenstange 12 in den Zylinder 14 nun oberhalb eines durch die Härte der Schraubenfeder 26 festgelegten Schwellenwerts, so übersteigt die durch den Staudruck erzeugte Kraft auf das Kolbenbodenelement 28 die entgegengesetzt wirkende Kraft der Schraubenfeder 26. In diesem Fall wird die Spiralfeder 26 zusammengedrückt und das Kolbenbodenelement 28 gleitet entlang der Kolbenstange 12 in Richtung des Hülsenelements 22, bis es an der Stirnfläche 22b des Hülsenelements 22 zur Anlage kommt. Die Stirnfläche 22b überlappt in diesem Zustand wenigstens teilweise mit den Durchbrechungen 28a des Kolbenbodenelements 28. Hierdurch wird der effektive Strömungsquerschnitt, der dem Dämpfungsfluid für sein Strömen vom zweiten Bereich 14b zum ersten Bereich 14a des Innenraums des Zylinders 14 bereitsteht, reduziert. Dies führt zu einem erhöhten hydraulischen Widerstand und somit zu einer erhöhten Dämpfungskraft der Dämpfereinheit 10. Durch eine geeignete Wahl der Härte der Spiralfeder 26 kann der Wert der Einführgeschwindigkeit der Kolbenstange 12 in den Zylinder 14 gewählt werden, oberhalb dessen die beschriebene Änderung der Dämpfungskraft der Dämpfereinheit 10 eintritt. Auf diese Weise wird mit einfachen Mitteln eine bezüglich der Einführgeschwindigkeit des Kolbens 12 progressive Dämpfungscharakteristik der Dämpfereinheit 10 erreicht.

In Figur 3 ist ein Querschnitt des Zylinders 14 in einem Bereich gezeigt, in dem die Innenwand 14c des Zylinders 14 eine Polygonform mit nach außen gebogenen Kanten und abgerundeten Ecken aufweist. In dem in Figur 3 gezeigten Beispiel handelt es sich bei dem Polygon um ein Dreieck. Ferner ist durch eine gestrichelte Linie ein Umriss des Kolbenbodenelements 28 bzw. des Dichtungselements 30 dargestellt, die in diesem Fall kreisrund sind. Die maximale Ausdehnung des Polygons gegenüber dem kreisförmigen Umriss des Kolbenbodenelements 28 bzw. des Dichtungselements 30 im Bereich der abgerundeten Ecken des Polygons ist in Figur 3 als Tiefe T bezeichnet.

Durch die gewählte Form der Innenwand 14c des Zylinders 14 werden zwischen dem Umriss des Kolbenbodenelements 28 bzw. des Dichtungselements 30 und der Innenwand 14c des Zylinders 14 Bereiche 36 bereitgestellt, durch die das Dämpfungsfluid an dem Kolbenbodenelement 28 und dem Dichtungselement 30 bei einem Einführen der Kolbenstange 12 in den Zylinder 14 vorbei strömen kann. Ferner sind symmetrisch drei Führungspunkte 38a bis 38c vorgesehen, an denen das Kolbenbodenelement 28 bzw. das Dichtungselement 30 mit der Innenwand 14c des Zylinders in Kontakt stehen und dort abgestützt sein können. Die gewählte Polygonform mit nach außen gebogenen Kanten erlaubt eine vorteilhafte Abstützung des Kolbenbodenelements 28 beispielsweise in einem Fall einer auftretenden Querbelastung der Kolbenstange 12. Gleichzeitig wird der Durchflussquerschnitt der Bereiche 36 verglichen mit dem Durchmesser des Zylinders 14 relativ groß. Somit bietet die gezeigte Ausführungsform bei einer kompakten Bauform einen großen Umgehungsquerschnitt für das Dämpfungsfluid und gleichzeitig eine vorteilhafte Abstützung des Kolbenbodenelements 28 im Fall von Querbelastungen, wobei ferner auf scharfe Kanten verzichtet wird, an denen eventuell im Falle einer Belastung Druckspitzen auftreten könnten.

Das in Figur 3 gezeigte Querschnittsprofil der Innenwand 14c des Zylinders 14 kann insbesondere in der erfindungsgemäßen Dämpfereinheit 10 im in Figur 1 gezeigten Bereich B eingesetzt werden, während im Bereich A das Querschnittsprofil der Innenwand 14c des Zylinders 14 im Wesentlichen dem Außenumfang des Kolbenbodenelements 28 bzw. des Dichtungselements 30 entspricht. Auf diese Weise wird bei einem Einführvorgang der Kolbenstange 12 in den Zylinder 14 auf dem zweiten Abschnitt B des Einführwegs die Dämpfungskraft deutlich verringert, da das Dämpfungsfluid das Kolbenbodenelement 28 und das Dichtungselement 30 großflächig umströmen kann. Auf diese Weise kann beispielsweise bei einer gedämpften Schließbewegung einer Klappe eines Kraftfahrzeugs dennoch sichergestellt werden, dass die Klappe sicher in ihr Schloss fällt, wenn andererseits ihre Schließbewegung gedämpft werden soll, um eine mögliche Beschädigung angrenzender Teile durch ein zu schnelles Schließen zu vermeiden.

## Patentansprüche

1. Dämpfereinheit, umfassend:
- einen mit einem Dämpfungsfluid gefüllten Zylinder (14), in welchem eine Kolbenstange (12) entlang einer axialen Richtung des Zylinders (14) ein- und ausführbar geführt ist, wobei der Kolbenstange (12) eine sich zwischen der Kolbenstange (12) und einer Innenwand (14c) des Zylinders (14) erstreckende Bodenfläche mit wenigstens einer axialen Durchbrechung (28a) zugeordnet ist, welche einen effektiven Durchflussquerschnitt für das Dämpfungsfluid definiert;
wobei die Kolbenstange (12) an ihrem in Einführrichtung in den Zylinder (14) vorderen Ende umfasst:
- einen in axialer Richtung an der Kolbenstange (12) festen Anschlag (22), welcher in Einführrichtung der Kolbenstange (12) eine Stirnfläche (22b) definiert;
- ein axial gleitbar an der Kolbenstange (12) getragenes Kolbenbodenelement (28), welches die Bodenfläche umfasst;
- ein elastisches Element (26), welches das Kolbenbodenelement (28) relativ zur Kolbenstange (12) so vorspannt, dass in einem Ruhezustand der Kolbenstange (12) die Bodenfläche des Kolbenbodenelements (28) und die Stirnfläche (22b) des Anschlags (22) durch die Wirkung des elastischen Elements (26) voneinander beabstandet sind; und
wobei das elastische Element (26) derart gebildet ist, dass oberhalb einer vorbestimmten Einführgeschwindigkeit der Kolbenstange (12) in den Zylinder (14) durch den Staudruck des Dämpfungsfluids die Bodenfläche des Kolbenbodenelements (28) mit der Stirnfläche (22b) des Anschlags (22) gegen die Wirkung des elastischen Elements (26) in Kontakt kommt, wobei durch das Zusammenwirken der Stirnfläche (22b) des Anschlags (22) und der wenigstens einen axialen Durchbrechung (28a) der Bodenfläche des Kolbenbodenelements (28) der effektive Durchflussquerschnitt für das Dämpfungsfluid verringert wird,
**dadurch gekennzeichnet, dass** dem Kolbenbodenelement (28) ein Dichtungselement (30) zugeordnet ist, welches eine Dichtung zwischen dem Kolbenbodenelement (28) und der Innenwand (14c) des Zylinders (14) bewirkt,
wobei das Dichtungselement (30) axiale Durchbrechungen aufweist, welche dem Fluss des Dämpfungsfluids im Vergleich an dem Kolbenbodenelement (28) nur einen geringen Widerstand entgegenbringen, und betriebsmäßig relativ zu der Kolbenstange (12) zusammen mit dem Kolbenbodenelement (28) durch den Staudruck des Dämpfungsfluids verlagerbar ist.

2. Dämpfereinheit nach Anspruch 1,
**dadurch gekennzeichnet, dass** der Anschlag durch ein Hülsenelement (22) gebildet ist, welches einen im Wesentlichen entlang der axialen Richtung verlaufenden, von der Kolbenstange (12) beabstandeten und in Einführrichtung der Kolbenstange offenen Mantel (22a) aufweist, so dass zwischen der Kolbenstange (12) und dem Mantel (22a) eine Kammer (24) gebildet ist, und wobei an dem offenen Ende des Mantels (22a) in Einführrichtung der Kolbenstange (12) die Stirnfläche (22b) des Anschlags (22) definiert ist;
wobei das elastische Element (26) wenigstens teilweise in der zwischen der Kolbenstange (12) und dem Hülsenelement (22) gebildeten Kammer (24) aufgenommen ist, so dass es sich einerseits an dem Hülsenelement (22) und andererseits an dem Kolbenbodenelement (28) abstützt.

3. Dämpfereinheit nach Anspruch 1 oder Anspruch 2, **dadurch gekennzeichnet, dass** ein in axialer Richtung an der Kolbenstange (12) festes Abschlusselement (34) vorgesehen ist, welches einen mittelbaren oder unmittelbaren Anschlag für das Kolbenbodenelement (28) in Einführrichtung der Kolbenstange (12) bildet.

4. Dämpfereinheit nach einem der vorhergehenden Ansprüche,
**dadurch gekennzeichnet, dass** das Dichtungselement (30) einen rechteckigen Querschnitt aufweist.

5. Dämpfereinheit nach einem der vorhergehenden Ansprüche,
**dadurch gekennzeichnet, dass** das Dichtungselement (30) gesondert von dem Kolbenbodenelement (28) gebildet und zwischen dem Kolbenbodenelement (28) und einem Halteelement (32) aufgenommen ist, wobei das Halteelement (32) gleitbar an der Kolbenstange (12) getragen ist und wenigstens eine axiale Durchbrechung aufweist.

6. Dämpfereinheit nach einem der Ansprüche 1 bis 5,
**dadurch gekennzeichnet, dass** die Kolbenstange (12) in ihrem axialen Bereich zwischen dem Abschlusselement (34) und dem Hülsenelement (22) einen Bereich (12a) mit einem verringerten Umfang aufweist.

7. Dämpfereinheit nach einem der Ansprüche 1 bis 6,
**dadurch gekennzeichnet, dass** das Abschlusselement (34) durch eine auf die Kolbenstange (12) aufgeschraubte Schraubenmutter gebildet ist.

8. Dämpfereinheit nach einem der vorhergehenden Ansprüche, wobei das Dichtungselement (30) eine Innenwand (14c) des Zylinders (14) berührt,
**dadurch gekennzeichnet, dass**
der Zylinder (14) einen axialen Abschnitt (B) umfasst, in welchem die Innenwand (14c) des Zylinders (14) einen Querschnitt von der Form eines Polygons mit nach außen gebogenen Kanten und abgerundeten Ecken aufweist.

9. Dämpfereinheit nach Anspruch 8, **dadurch gekennzeichnet, dass** das Dichtungselement (30) in axialer Ansicht einen im Wesentlichen kreisförmigen Umfang aufweist, wobei der Umfang des Dichtungselements (30) im Wesentlichen einem einbeschriebenen Kreis des Polygons entspricht.

10. Dämpfereinheit nach Anspruch 8 und gegebenenfalls nach einem der vorhergehenden Ansprüche, **dadurch gekennzeichnet, dass** das Dichtungselement (30) in axialer Ansicht einen im Wesentlichen kreisförmigen Umfang aufweist,
dass der Zylinder (14) einen ersten axialen Abschnitt (A) umfasst, in welchem die Innenwand (14c) des Zylinders (14) einen kreisförmigen Querschnitt aufweist, welcher im Wesentlichen denselben Umfang hat wie das Dichtungselement; und
dass der Zylinder (14) einen zweiten axialen Abschnitt (B) umfasst, in welchem die Innenwand (14c) des Zylinders (14) einen Querschnitt von der Form eines Polygons mit nach außen gebogenen Kanten und abgerundeten Ecken aufweist, wobei der Umfang des Dichtungselements (30) im Wesentlichen einem einbeschriebenen Kreis des Polygons entspricht.

11. Dämpfereinheit nach einem der Ansprüche 8 bis 10,
**dadurch gekennzeichnet, dass** das Polygon ein Dreieck ist.

12. Dämpfereinheit nach Anspruch 10 oder Anspruch 11,
**dadurch gekennzeichnet, dass**
im ersten axialen Bereich (A) die Innenwand (14c) des Zylinders (14) über wenigstens einen Teil des Bereichs wenigstens eine axiale Nut aufweist.

13. Dämpferanordnung für eine Klappe eines Kraftfahrzeugs, umfassend eine Dämpfereinheit (10) nach einem der Ansprüche 1 bis 12.

14. Dämpferanordnung nach Anspruch 13, vorzugsweise umfassend eine Dämpfereinheit (10) nach einem der Ansprüche 8 bis 12,
**dadurch gekennzeichnet, dass** die Dämpferanordnung bei einer Schließbewegung ab einem vorbestimmten Schließweg eine dritte Dämpfungskraft aufweist, welche kleiner als eine erste Dämpfungskraft bei einer Schließgeschwindigkeit der Klappe unterhalb eines vorbestimmten Schwellenwerts und als eine zweite Dämpfungskraft bei einer Schließgeschwindigkeit oberhalb des Schwellenwerts ist.

15. Dämpferanordnung nach Anspruch 13 oder 14,
**dadurch gekennzeichnet, dass** die Kolbenstange (12) an ihrem dem Kolben gegenüber liegenden Ende einen Klappenanschlag (121) aufweist, welcher dafür eingerichtet ist, bei der Schließbewegung der Klappe in Kontakt mit der Klappe zu gelangen, so dass die Klappe eine axiale Kraft in einer Einführrichtung der Kolbenstange (12) in den Zylinder (14) auf den Klappenanschlag (21) überträgt.

16. Klappenanordnung, umfassend einen Rahmen (110) eines Kraftfahrzeugs, eine an dem Rahmen zwischen einer Öffnungsstellung und einer Schließstellung bewegbar angebrachte Klappe sowie eine Dämpferanordnung nach Anspruch 15, dessen Zylinder (14) an dem Rahmen (110) oder an der Klappe befestigt oder zu befestigen ist,
**dadurch gekennzeichnet, dass** die Klappe von der Öffnungsstellung aus über einen ersten Teilwegbereich im Wesentlichen von der Dämpferanordnung entkoppelt bewegbar ist, bis die Klappe an dem Klappenanschlag (121) anschlägt, und dass die Klappe anschließend über einen zweiten Teilwegbereich in die Schließstellung bewegbar ist und dabei die Kolbenstange (12) in den Zylinder (14) einschiebt.

## Claims

1. Damper unit comprising:
- a cylinder filled with a damping fluid (14), in which cylinder a piston rod (12) is guided in an axial direction of the cylinder (14) for insertion and removal, the piston rod (12) being associated with a base surface which extends between the piston rod (12) and an inner wall (14c) of the cylinder (14) and has at least one axial opening (28a), which opening defines an effective flow cross-section for the damping fluid; the piston rod (12) comprising, at its front end in the direction of insertion into the cylinder (14):
- an stop (22) which is fixed on the piston rod (12) in the axial direction and which defines an end face (22b) in the direction of insertion of the piston rod (12);
- a piston crown element (28) which is supported on the piston rod (12) so as to be axially slidable and which comprises the base surface;
- a resilient element (26) which prestresses the piston crown element (28) relative to the piston rod (12) in such a way that, when the piston rod (12) is at rest, the base surface of the piston crown element (28) and the end face (22b) of the stop (22) are spaced apart by the action of the resilient element (26); and
the resilient element (26) being formed such that above a predetermined insertion speed of the piston rod (12) into the cylinder (14), due to the dynamic pressure of the damping fluid the base surface of the piston crown element (28) comes into contact with the end face (22b) of the stop (22) against the action of the resilient element (26), the effective flow cross-section for the damping fluid being reduced by the interaction of the end face (22b) of the stop (22) and the at least one axial opening (28a) of the base surface of the piston crown element (28), **characterised in that** the piston crown element (28) is assigned a sealing element (30) which produces a seal between the piston crown element (28) and the inner wall (14c) of the cylinder (14), the sealing element (30) having axial openings, which provide only slight resistance to the flow of the damping fluid compared to the piston crown element (28), and being operationally displaceable relative to the piston rod (12) together with the piston crown element (28) due to the dynamic pressure of the damping fluid.

2. Damper unit according to claim 1, **characterised in that** the stop is formed by a sleeve element (22) which comprises a cladding (22a) that extends substantially in the axial direction, is spaced apart from the piston rod (12) and is open in the direction of insertion of the piston rod, so that a chamber (24) is formed between the piston rod (12) and the cladding (22a), and the end face (22b) of the stop (22) being defined at the open end of the cladding (22a) in the direction of insertion of the piston rod (12);
the resilient element (26) being at least partially received in the chamber (24) formed between the piston rod (12) and the sleeve element (22), so that said element is supported on the one hand on the sleeve element (22) and on the other hand on the piston crown element (28).

3. Damper unit according to either claim 1 or claim 2, **characterised in that** an end element (34) that is fixed on the piston rod (12) in the axial direction is provided, which element forms an indirect or direct stop for the piston crown element (28) in the direction of insertion of the piston rod (12).

4. Damper unit according to any of the preceding claims, **characterised in that** the sealing element (30) has a rectangular cross-section.

5. Damper unit according to any of the preceding claims, **characterised in that** the sealing element (30) is formed separately from the piston crown element (28) and is incorporated between the piston crown element (28) and a holding element (32), the holding element (32) being slidably supported on the piston rod (12) and having at least one axial opening.

6. Damper unit according to any of claims 1 to 5, **characterised in that** the piston rod (12), in its axial region between the end element (34) and the sleeve element (22), comprises a region (12a) having a reduced circumference.

7. Damper unit according to any of claims 1 to 6, **characterised in that** the end element (34) is formed by a nut screwed onto the piston rod (12).

8. Damper unit according to any of the preceding claims, wherein the sealing element (30) touches an inner wall (14c) of the cylinder (14), **characterised in that** the cylinder (14) comprises an axial portion (B) in which the inner wall (14c) of the cylinder (14) has a cross-section in the shape of a polygon with edges bent outwards and rounded corners.

9. Damper unit according to claim 8, **characterised in that** the sealing element (30), in an axial view, has a substantially circular circumference, the circumference of the sealing element (30) substantially corresponding to an inscribed circle of the polygon.

10. Damper unit according to claim 8 and optionally according to any of the preceding claims, **characterised in that** the sealing element (30), in an axial view, has a substantially circular circumference, and **in that** the cylinder (14) comprises a first axial portion (A) in which the inner wall (14c) of the cylinder (14) has a circular cross-section which has substantially the same circumference as the sealing element;
and **in that** the cylinder (14) comprises a second axial portion (B) in which the inner wall (14c) of the cylinder (14) has a cross-section in the shape of a polygon with edges bent outwards and rounded corners, the circumference of the sealing element (30) substantially corresponding to an inscribed circle of the polygon.

11. Damper unit according to any of claims 8 to 10, **characterised in that** the polygon is a triangle.

12. Damper unit according to either claim 10 or claim 11, **characterised in that** in the first axial region (A), the inner wall (14c) of the cylinder (14) comprises at least one axial groove over at least part of the region.

13. Damper arrangement for a panel of a motor vehicle, comprising a damper unit (10) according to any of claims 1 to 12.

14. Damper arrangement according to claim 13, preferably comprising a damper unit (10) according to any of claims 8 to 12, **characterised in that** the damper arrangement has a third damping force from a predetermined closing path during a closing movement, which third damping force is smaller than a first damping force at a closing speed of the panel that is below a predetermined threshold and smaller than a second damping force at a closing speed that is above the threshold.

15. Damper arrangement according to either claim 13 or claim 14, **characterised in that** the piston rod (12), at its end opposite the piston, comprises a panel stop (121) which is designed to come into contact with the panel during the closing movement of the panel, so that the panel transmits an axial force to the panel stop (21) in a direction of insertion of the piston rod (12) into the cylinder (14).

16. Panel arrangement comprising a frame (110) of a motor vehicle, a panel attached to the frame so as to be movable between an open position and a closed position, and a damper arrangement according to claim 15, the cylinder (14) of which is fastened or is to be fastened to the frame (110) or to the panel, **characterised in that** the panel can be moved from the open position via a first partial travel range so as to be substantially decoupled from the damper arrangement, until the panel strikes the panel stop (121), and **in that** the panel can subsequently be moved into the closed position and thereby pushes the piston rod (12) into the cylinder (14).

## Revendications

1. Unité formant amortisseur, comprenant :
- un cylindre (14) rempli d'un fluide d'amortissement, dans lequel une tige de piston (12) est guidée de manière à pouvoir être entrée et sortie le long d'une direction axiale du cylindre (14), dans laquelle une surface de fond s'étendant entre la tige de piston (12) et une paroi intérieure (14c) du cylindre (14) avec au moins un ajour (28a) axial est associée à la tige de piston (12), laquelle définit une section transversale de passage efficace pour le fluide d'amortissement ;
dans laquelle la tige de piston (12) comprend au niveau de son extrémité avant dans la direction d'introduction dans le cylindre (14) :
- une butée (22) fixe dans la direction axiale au niveau de la tige de piston (12), laquelle définit dans la direction d'introduction de la tige de piston (12) une surface frontale (22b) ;
- un élément de fond de piston (28) supporté de manière à pouvoir glisser axialement au niveau de la tige de piston (12), lequel comprend la surface de fond ;
- un élément élastique (26), lequel précontraint l'élément de fond de piston (28) par rapport à la tige de piston (12) de telle sorte que dans un état de repos de la tige de piston (12), la surface de fond de l'élément de fond de piston (28) et la surface frontale (22b) de la butée (22) sont tenues à distance l'une de l'autre par l'action de l'élément élastique (26) ; et
dans laquelle l'élément élastique (26) est formé de telle manière que la surface de fond de l'élément de fond de piston (28) vient en contact avec la surface frontale (22b) de la butée (22) à l'encontre de l'action de l'élément élastique (26) au-dessus d'une vitesse d'introduction prédéfinie de la tige de piston (12) dans le cylindre (14) du fait de la pression dynamique du fluide d'amortissement, dans laquelle la section transversale de passage efficace pour le fluide d'amortissement est réduite du fait de la coopération de la surface frontale (22b) de la butée (22) et de l'au moins un ajour (28a) axial de la surface de fond de l'élément de fond de piston (28),
**caractérisée en ce qu'**est associé à l'élément de fond de piston (28) un élément d'étanchéité (30), lequel entraîne une étanchéité entre l'élément de fond de piston (28) et la paroi intérieure (14c) du cylindre (14),
dans laquelle l'élément d'étanchéité (30) présente des ajours axiaux, lesquels offrent à l'écoulement du fluide d'amortissement comparativement au niveau de l'élément de fond de piston (28) seulement une résistance inférieure et peut être déplacé de manière fonctionnelle par rapport à la tige de piston (12) conjointement avec l'élément de fond de piston (28) du fait de la pression dynamique du fluide d'amortissement.

2. Unité formant amortisseur selon la revendication 1,
**caractérisée en ce que** la butée est formée par un élément de douille (22), lequel présente une enveloppe (22a) s'étendant sensiblement le long de la direction axiale, tenue à distance de la tige de piston (12) et ouverte dans la direction d'introduction de la tige de piston de sorte qu'une chambre (24) est formée entre la tige de piston (12) et l'enveloppe (22a), et dans laquelle la surface frontale (22b) de la butée (22) est définie au niveau de l'extrémité ouverte de l'enveloppe (22a) dans la direction d'introduction de la tige de piston (12) ;
dans laquelle l'élément élastique (26) est logé au moins en partie dans la chambre (24) formée entre la tige de piston (12) et l'élément de douille (22) de sorte qu'il prend appui d'une part au niveau de l'élément de douille (22) et d'autre part au niveau de l'élément de fond de piston (28).

3. Unité formant amortisseur selon la revendication 1 ou la revendication 2, **caractérisée en ce qu'**un élément de terminaison (34) fixe dans la direction axiale au niveau de la tige de piston (12) est prévu, lequel forme une butée indirecte ou directe pour l'élément de fond de piston (28) dans la direction d'introduction de la tige de piston (12).

4. Unité formant amortisseur selon l'une quelconque des revendications précédentes, **caractérisée en ce que** l'élément d'étanchéité (30) présente une section transversale rectangulaire.

5. Unité formant amortisseur selon l'une quelconque des revendications précédentes, **caractérisée en ce que** l'élément d'étanchéité (30) est formé séparément de l'élément de fond de piston (28) et est logé entre l'élément de fond de piston (28) et un élément de maintien (32), dans laquelle l'élément de maintien (32) est supporté de manière à pouvoir glisser au niveau de la tige de piston (12) et présente au moins un ajour axial.

6. Unité formant amortisseur selon l'une quelconque des revendications 1 à 5, **caractérisée en ce que** la tige de piston (12) présente dans sa zone axiale entre l'élément de terminaison (34) et l'élément de douille (22) une zone (12a) avec une périphérie réduite.

7. Unité formant amortisseur selon l'une quelconque des revendications 1 à 6, **caractérisée en ce que** l'élément de terminaison (34) est formé par un écrou de vis vissé sur la tige de piston (12).

8. Unité formant amortisseur selon l'une quelconque des revendications précédentes, dans laquelle l'élément d'étanchéité (30) touche une paroi intérieure (14c) du cylindre (14),
**caractérisée en ce que**
le cylindre (14) comprend une section axiale (B), dans laquelle la paroi intérieure (14c) du cylindre (14) présente une section transversale de la forme d'un polygone avec des arêtes cintrées vers l'extérieur et des angles arrondis.

9. Unité formant amortisseur selon la revendication 8, **caractérisée en ce que** l'élément d'étanchéité (30) présente dans une vue axiale une périphérie de forme sensiblement circulaire, dans laquelle la périphérie de l'élément d'étanchéité (30) correspond sensiblement à un cercle inscrit du polygone.

10. Unité formant amortisseur selon la revendication 8 et éventuellement selon l'une quelconque des revendications précédentes, **caractérisée en ce**
**que** l'élément d'étanchéité (30) présente dans une vue axiale une périphérie de forme sensiblement circulaire,
**que** le cylindre (14) comprend une première section axiale (A), dans laquelle la paroi intérieure (14c) du cylindre (14) présente une section transversale de forme circulaire, laquelle a sensiblement la même périphérie que l'élément d'étanchéité ; et
**que** le cylindre (14) comprend une deuxième section axiale (B), dans laquelle la paroi intérieure (14c) du cylindre (14) présente une section transversale de la forme d'un polygone avec des arêtes cintrées vers l'extérieur et des angles arrondis, dans laquelle la périphérie de l'élément d'étanchéité (30) correspond sensiblement à un cercle inscrit du polygone.

11. Unité formant amortisseur selon l'une quelconque des revendications 8 à 10, **caractérisée en ce que** le polygone est un triangle.

12. Unité formant amortisseur selon la revendication 10 ou la revendication 11, **caractérisée en ce que**
dans la première zone axiale (A), la paroi intérieure (14c) du cylindre (14) présente sur au moins une partie de la zone au moins une rainure axiale.

13. Ensemble formant amortisseur pour un clapet d'un véhicule automobile, comprenant une unité formant amortisseur (10) selon l'une quelconque des revendications 1 à 12.

14. Ensemble formant amortisseur selon la revendication 13, comprenant de préférence une unité formant amortisseur (10) selon l'une quelconque des revendications 8 à 12,
**caractérisé en ce que** l'ensemble formant amortisseur présente lors d'un déplacement de fermeture à partir d'un trajet de fermeture prédéfini une troisième force d'amortissement, laquelle est inférieure à une première force d'amortissement à une vitesse de fermeture du clapet inférieure à une valeur de seuil prédéfinie et à une deuxième force d'amortissement à une vitesse de fermeture supérieure à la valeur de seuil.

15. Ensemble formant amortisseur selon la revendication 13 ou 14,
**caractérisé en ce que** la tige de piston (12) présente au niveau de son extrémité faisant face au piston une butée de clapet (121), laquelle est mise au point pour parvenir en contact avec le clapet lors d'un déplacement de fermeture du clapet de sorte que le clapet transmet sur la butée de clapet (21) une force axiale dans une direction d'introduction de la tige de piston (12) dans le cylindre (14).

16. Ensemble formant clapet, comprenant un châssis (110) d'un véhicule automobile, un clapet pouvant être installé au niveau du châssis de manière à pouvoir être déplacé entre une position d'ouverture et une position de fermeture, ainsi qu'un ensemble formant amortisseur selon la revendication 15, dont le cylindre (14) est fixé ou est à fixer au niveau du châssis (110) ou au niveau du clapet,
**caractérisé en ce que** le clapet peut être déplacé depuis la position d'ouverture sur une première zone de trajet partielle sensiblement de manière découplée de l'ensemble formant amortisseur, jusqu'à ce que le clapet bute au niveau de la butée de clapet (121), et que le clapet peut être déplacé ensuite sur une deuxième zone de trajet partielle dans la position de fermeture et enfile ce faisant la tige de piston (12) dans le cylindre (14).
